# EUROPEAN PATENT SPECIFICATION

(11) **EP 2 314 448 B1**
(45) Date of publication and mention of the grant of the patent: **03.12.2014**
(21) Application number: 09797690.6
(22) Date of filing: 14.07.2009
(51) Int. Cl.: B32B 5/26, B32B 37/06, H01M 2/14

(54) **METHOD FOR LAYERING HETEROGENEOUS MATERIALS INCLUDING PLASTIC NONWOVEN FABRIC**
VERFAHREN ZUR SCHICHTWEISEN ANORDNUNG HETEROGENER MATERIALIEN EINSCHLIESSLICH VLIES
PROCÉDÉ DE STRATIFICATION DE MATÉRIAUX HÉTÉROGÈNES COMPRENANT DU PLASTIQUE NON-TISSÉ

(30) Priority: 15.07.2008 JP 2008184265
(43) Date of publication of application: 27.04.2011
(73) Proprietor: Fukuhara, Yasuhiro, Nara 636-0303 (JP)
(72) Inventor: Fukuhara, Yasuhiro, Nara 636-0303 (JP)
(74) Representative: Hauck Patent- und Rechtsanwälte
(86) International application number: PCT/JP2009/003300
(87) International publication number: WO 2010/007762

(56) References cited:
- JP-A- 2001 140 153
- JP-A- 2001 228 879
- JP-B- 44 000 956
- US-A1- 2003 003 826

## Description

### [TECHNICAL FIELD]

The present invention relates to a method of laminating different materials which superposes and thermally bonds different materials including nonwoven fabrics made of synthetic resin in two or more layers.

### [BACKGROUND ART]

Applicant herein possesses a patent right relating to a "Film for Dental Impression" which enables bonding of two different types of dental impression materials which has been inconceivable in the conventional combined impression (Japanese Patent No. 4111250).

Applicant herein has also filed the following patent application relating to a "method of manufacturing a film for dental impression" (Japanese Patent Application No. 2007-284405).

It is characterized in that a nonwoven fabric made of synthetic resin (e.g. a double structure fabric of polyethylene and polyester) is placed on each of the two surfaces of a synthetic resin film (e.g. a polyethylene film) to form three layers, which are wound around a roll and to form a rolled whole, and the nonwoven fabrics made of synthetic resin are thermally bonded to both surfaces of the synthetic resin film by heating them at a predetermined temperature with a heating device. It has been found that it is suitable to heat at a heatproof temperature or higher, using a high-pressure steam sterilizer as the heating device, and its contents have been disclosed. This high-pressure steam sterilizer refers to an instrument which carries out saturated vapor sterilization at a pressure above atmospheric pressure. By setting a predetermined sterilization temperature and sterilization time, it becomes possible to thermally bond the nonwoven fabrics made of synthetic resin to both surfaces of the synthetic resin film.

On the other hand, Applicant herein not only engages in manufacturing and selling and in research and development of the above dental materials, but is pursuing research on a material thermal bonding technique after establishing Microfix Kabushiki Kaisha on March 6, 2008 for the purpose of research and development, manufacturing and selling, and so on, of fiber products.

With conventional secondary batteries, the fiber contact method and air through method constitute the mainstream. A separator used for a conventional secondary battery is a composite fiber of polypropylene/polyethylene made into a sheet form. Hot air is blown to a sheet-like separator material and an electrode plate placed in pressure contact, to bond the two materials.

The bonded sheet is wound in multiple wraps to be formed into the shape of a battery. Then, the separator is infiltrated with an electrolytic solution.

[Patent Document 1] Patent No. 4111250

US 2003/0003826 A1 discloses a multiple component spunbond web and laminates thereof. The spunbond nonwoven fabric is formed from continuous multiple component filaments which include a polyester component and polyethylene component. The polyethylene component is a blend of high density polyethylene and a first linear low density polyethylene. Multiple layers of the composite fabric are formally bonded to one another. The thermal bonding temperatures is in the range of 110°C to 130°C and the bonding pressure in the range of 350 - 700 N/cm.

### [DISCLOSURE OF THE INVENTION]

### [PROBLEM TO BE SOLVED BY THE INVENTION]

The present invention is based on Applicant herein taking notice of wide use in thermal bonding of various materials of the high-pressure steam sterilizer employed as the heating device to carry out thermal bonding of the materials in the manufacture process of the "Film for Dental Impression" noted above, or a high-pressure steam pot, and its object is to provide a method of laminating different materials capable of thermal bonding between layers of different materials including nonwoven fabrics made of synthetic resin as superposed one over another in two or more layers, while retaining the 3D conformation of fibers of the nonwoven fabrics made of synthetic resin. The vapor of the high-pressure steam sterilizer or high-pressure steam pot need not be water vapor, but may be a nonaqueous organic solvent depending on intended use.

In manufacturing a conventional secondary battery, since the electrolytic solution for the separator cannot infiltrate easily, there is a problem that a large-sized battery cannot be manufactured.

### [MEANS FOR SOLVING THE PROBLEM]

To solve the above problem, the present invention provides the following arrangement.

A method of laminating different materials including nonwoven fabrics made of synthetic resin, according to the present invention, is a method of laminating different materials which superposes and thermally bonds different materials including nonwoven fabrics made of synthetic resin in two or more layers, wherein the layers are thermally bonded with each other while retaining a 3D conformation of fibers of the nonwoven fabrics made of synthetic resin, by heating at a heatproof temperature or higher, using a high-pressure steam sterilizer or a high-pressure steam pot.

It is preferred that a vapor in the high-pressure steam sterilizer or the high-pressure steam pot noted above is water vapor.

It is preferred that a vapor in the high-pressure steam sterilizer or the high-pressure steam pot is a vapor of an organic solvent.

It is preferred that the different materials include at least two nonwoven fabrics made of synthetic resin which are formed of different materials.

It is preferred that the different materials include a synthetic resin film.

It is preferred that the different materials include a metal film.

The vapor of the high-pressure steam sterilizer or high-pressure steam pot (which are hereinafter collectively called the high-pressure applying device) is not limited to water vapor. Vapors of alcohol solvents such as ethanol and methanol, and ester carbonate solvents such as propylene carbonate (C₄H₆O₃: boiling point at 241.7°C), can be used.

The different materials including the nonwoven fabrics made of synthetic resin will be heated and bonded by the high-pressure applying device. When an exhaust valve of the high-pressure applying device in a high-pressure state is opened after the different materials have been bonded inside the high-pressure applying device, the vapor in the oven of the high-pressure applying device is exhausted. When the exhaust valve is closed again in this state, and no action is taken until the temperature inside the high-pressure applying device falls, the vapor in the oven will condense and thus the pressure in the oven lowers to a substantially vacuum state. The substantially vacuum state is convenient when the different materials including the nonwoven fabrics made of synthetic resin of the present invention are intended for application to a secondary battery.

When, in such a state, a solvent-injecting valve provided for the high-pressure applying device is opened, the solvent flows into the oven promptly since the pressure in the oven has been reduced to a negative pressure. The introduced solvent tries to enter the different materials. Since the hollows provided for the nonwoven fabrics made of synthetic resin do not include air, but are in a substantially vacuum state, the solvent infiltrates the hollows to fill the latter. Then, the solvent will be injected thoroughly to the interior of the nonwoven fabrics made of synthetic resin. As the solvent of this time, a substance other than that selected as the vapor of the above high-pressure applying device may be used.

### [EFFECTS OF THE INVENTION]

According to the present invention, as described above, different materials including nonwoven fabrics made of synthetic resin are superposed in two or more layers, and heated at a heatproof temperature or higher, using a high-pressure steam sterilizer or a high-pressure steam pot. The materials are not placed in close contact by applying a mechanical pressure with rollers simultaneously with heating and melting as practiced with a conventional laminating apparatus. Therefore, the materials can be laminated together while retaining the 3D conformation of fibers of the nonwoven fabrics made of synthetic resin. Not only that the 3D conformation of the materials does not collapse after the thermal bonding, but it is also possible to save the time and effort of manufacturing.

### [BEST MODE FOR CARRYING OUT THE INVENTION]

Embodiments of the present invention will be described hereinafter.

The present invention provides a method of laminating different materials which superposes and thermally bonds different materials including nonwoven fabrics made of synthetic resin in two or more layers, wherein the layers are thermally bonded with each other while retaining a 3D conformation of fibers of the nonwoven fabrics made of synthetic resin, by heating at a heatproof temperature or higher using a high-pressure steam sterilizer or a high-pressure steam pot.

The present invention is not limited to the following embodiments. Specific contents of the constituent elements can be varied as appropriate within a range corresponding to the purport of the present invention.

Usable as the nonwoven fabrics made of synthetic resin according to the present invention are nonwoven fabrics formed of synthetic fibers such as polyethylene fiber, polyester fiber, polypropylene fiber, nylon fiber, vinylon fiber, acrylic fiber and aramid fiber, for example. The types of the above nonwoven fabrics include, for example, nonwoven fabrics of the dry type such as range bond nonwoven fabrics, thermal bond nonwoven fabrics, needle punch nonwoven fabrics, spun race nonwoven fabrics and air laid nonwoven fabrics, and nonwoven fabrics of the direct spinning type such as spun bond nonwoven fabrics and melt blow nonwoven fabrics. The basis weight, thickness and so on of the nonwoven fabrics can be varied as appropriate according to intended use.

Although there is no limitation as to the types of different materials, the materials should be such that contact surfaces of the layers are thermally bonded when the nonwoven fabrics made of synthetic resin are heated to a heatproof temperature or higher to be melted.

In order to increase the bonding strength between a synthetic resin film and a different material, numerous circular holes or slit-like slots can be formed in the different material. With this construction, the two synthetic resin nonwoven fabrics having the different material in between communicate through the holes formed in an electrode plate, and the synthetic resin nonwoven fabrics will be bonded together there, which improves the mechanical strength of the laminated body. With the synthetic resin nonwoven fabrics bonded to each other in this way, the synthetic resin nonwoven fabrics and the different material will never separate even when the synthetic resin nonwoven fabrics and the different material are not bonded to each other.

### (First Embodiment)

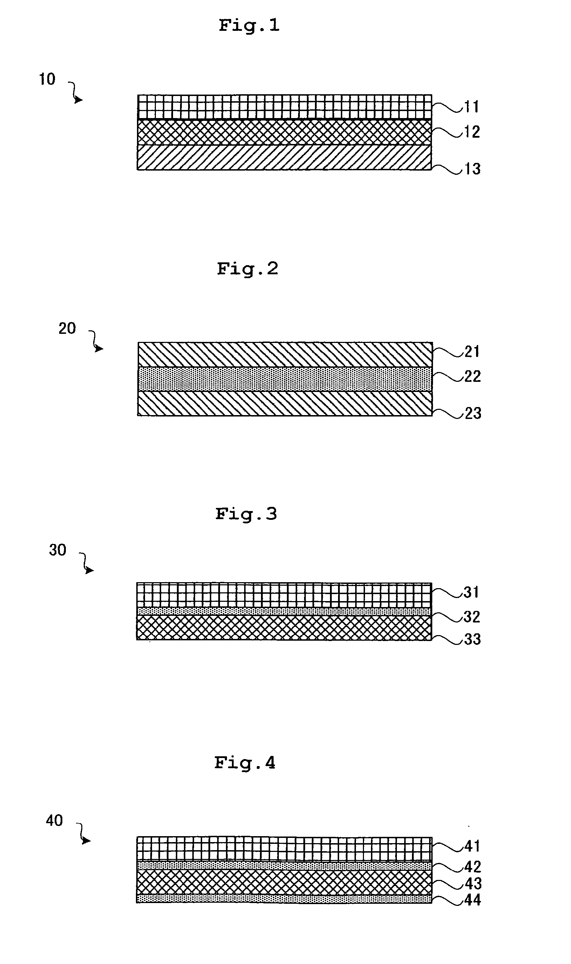

Fig. 1 is an explanatory view showing a first embodiment of lamination of three nonwoven fabrics made of synthetic resin consisting of different materials superposed one over another in three layers, and thermally bonded by heating at a heatproof temperature or higher using a high-pressure steam sterilizer or a high-pressure steam pot.

A laminated body 10 has layers thermally bonded together while retaining a 3D conformation of fibers of each of a nonwoven fabric A made of synthetic resin (referenced 11), a nonwoven fabric B made of synthetic resin (referenced 12) and a nonwoven fabric C made of synthetic resin (referenced 13).

The heating temperature of the high-pressure steam sterilizer or high-pressure steam pot is variable with the material of each nonwoven fabric made of synthetic resin. For a nonwoven fabric made of synthetic resin including polyethylene fiber, for example, it is preferred to set a heatproof temperature of polyethylene or higher, which is within a range of 118 to 135°C.

The laminated body 10 is not limited to the three layers shown in this embodiment, but may be laminated in four layers, five layers or more, depending on intended use. Examples of use of this embodiment include a heat insulator, a filter and a filtering material. By selecting suitable heat-resistant nonwoven fabrics made of synthetic resin, the nonwoven fabrics made of synthetic resin can be used for bonding each layer of electrolyte films, hydrogen poles (including catalyst layers) and air poles (including catalyst layers) of fuel cells. At this time, if a polyethylene film is used as a nonwoven fabric made of synthetic resin, a porous film will be formed by heating under high-pressure vapor by the high-pressure steam sterilizer or high-pressure steam pot.

### (Second Embodiment)

Fig. 2 is an explanatory view showing a second embodiment of a laminated body of a nonwoven fabric made of synthetic resin placed on each of the two surfaces of a synthetic resin film to form three layers, and thermally bonded by heating at a heatproof temperature or higher, using a high-pressure steam sterilizer or a high-pressure steam pot.

A laminated body 20 is formed of a nonwoven fabric D made of synthetic resin (referenced 21), the synthetic resin film (referenced 22) and the nonwoven fabric D made of synthetic resin (referenced 23), which are thermally bonded while retaining a 3D conformation of fibers of the nonwoven fabric made of synthetic resin.

The heating temperature of the high-pressure steam sterilizer or high-pressure steam pot is variable with the materials of the synthetic resin film and nonwoven fabric made of synthetic resin. Where, for example, a polyethylene film is employed as the synthetic resin film, and a double structure fabric of polyethylene and polyester as the nonwoven fabric made of synthetic resin, it is preferred to set a heat-resistant temperature of polyethylene or higher, which is within a range of 118 to 135°C.

The laminated body 20 is not limited to the three layers shown in this embodiment.

As examples of use of this embodiment, wide use can be made in general fields, besides the medical field as dental materials as in the "Film for Dental Impression" (Patent No. 4111250) for which Applicant herein has a patent right.

### (Third Embodiment)

Fig. 3 is an explanatory view showing a third embodiment of a laminated body of a nonwoven fabric made of synthetic resin placed on each of the two surfaces of a metal film to form three layers, and thermally bonded by heating at a heatproof temperature or higher, using a high-pressure steam sterilizer or a high-pressure steam pot.

A laminated body 30 is formed of a nonwoven fabric E made of synthetic resin (referenced 31), a metal film such as of nickel, chromium or cobalt (referenced 32), and a nonwoven fabric F made of synthetic resin (referenced 33), which are laminated while retaining a 3D conformation of fibers of the nonwoven fabrics made of synthetic resin.

The heating temperature of the high-pressure steam sterilizer or high-pressure steam pot is variable with the materials of the nonwoven fabrics made of synthetic resin. For a nonwoven fabric made of synthetic resin including polyethylene fiber, for example, it is preferred to set a heatproof temperature of polyethylene or higher, which is within a range of 118 to 135°C.

The laminated body 20 is not limited to the three layers shown in this embodiment.

Examples of use of this embodiment include a heat-retainer.

### <Application to Secondary Battery>

The present invention is applicable to manufacture of secondary batteries. That is, nonwoven fabrics made of synthetic resin are used as separators of a secondary battery, and metal films as electrode plates. In manufacturing a secondary battery, a laminated body is constructed as shown in Fig. 4. That is, a laminated body 40 has a four-layered structure having a nonwoven fabric 41 made of synthetic resin, a negative electrode plate 42, a nonwoven fabric 43 made of synthetic resin and a positive electrode plate 44, which are laminated in the stated order. The nonwoven fabrics 41 and 43 made of synthetic resin are filled with an electrolytic solution afterward.

The electrolytic solution and electrode plates used are as follows. When manufacturing a nickel-hydrogen battery, the positive electrode plate 44 is nickel oxide, and the negative electrode plate 42 a hydrogen-storing alloy. An alkaline water solution is selected as the electrolytic solution. When manufacturing a nickel-cadmium battery, the positive electrode plate 44 is nickel oxide, and the negative electrode plate 42 cadmium. An alkaline water solution is selected as the electrolytic solution. When manufacturing a lithium ion battery, the positive electrode plate 44 is lithium multiple oxide, and the negative electrode plate 42 carbon. A nonaqueous organic solvent electrolytic solution is selected as the electrolytic solution.

The laminated body 40 having the four-layered structure is rolled cylindrical to have the positive electrode plate 44 inside, and formed in the shape of a secondary battery. In this state, the laminated body 40 has not been heated and each layer is not bonded yet. By varying the manner of rolling the laminated body 40, a secondary battery of varied shape is formed. For example, by winding the laminated body 40 in multiple wraps about a core axis, a resulting column may have a sectional shape such as circular, triangular, semicircular, trapezoidal or square. Furthermore, the sectional shape can be made more complicated, to be a shape that fills a dead space inside an electrical product. In addition, the laminated body 40 may be rolled in multiple wraps to form a cylinder having a hollow space inside.

The case of rolling the laminated body 40 into a hollow cylinder will be described. A battery manufactured at this time will become cylindrical. A coolant such as air can be passed through the hollow space of the cylinder of such battery to inhibit heat generation of the secondary battery. Such construction is suited to a large, high-output secondary battery, and is suitable as a secondary battery for an electric vehicle or hybrid vehicle.

In order to increase the bonding strength between the synthetic resin films and electrode plate, numerous circular holes or slit-like slots can be formed in the electrode plate. With this construction, the two synthetic resin nonwoven fabrics having the electrode plate in between communicate through the holes formed in the electrode plate, and the synthetic resin nonwoven fabrics will be bonded together there, which improves the mechanical strength of the laminated body 40.

The rolled laminated body 40 is placed in the oven of a high-pressure steam sterilizer or a high-pressure steam pot. Then, the interior of the oven is sealed, pressurized and heated. The interior of the oven will be filled with a hot and high-pressure vapor at this time. This vapor may be water vapor, or may be a nonaqueous organic solvent.

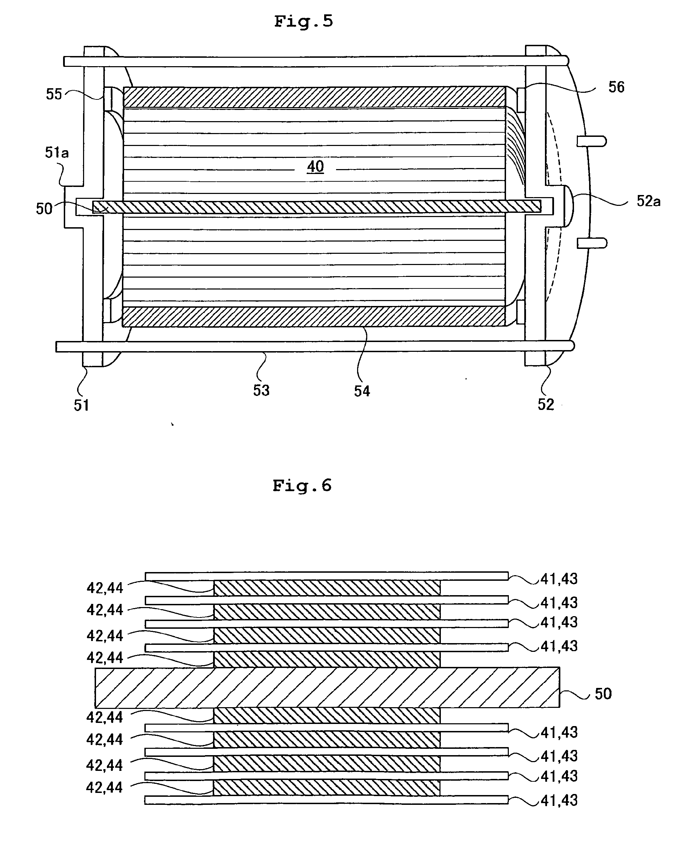

The laminated body 40 placed in the oven has various members of a secondary battery assembled thereto. Specifically, the secondary battery before this heating is as shown in Fig. 5. The laminated body 40 wound in multiple wraps is covered inside a cylindrical housing 54. Lids 51 and 52 are provided respectively to be capable of closing two openings of the housing 54. The secondary battery to be manufactured is placed in an upstanding state in the oven so that this lower lid 51 is located at the bottom side of the oven interior and the upper cover 52 at the top side of the oven interior. At this time, gaps for taking in the vapor are provided, respectively, between the lower lid 51 and housing 54 and between the upper cover 52 and housing 54. Inflow and the outflow of the vapor and inflow of the electrolytic solution take place with respect to the laminated body 40 through these gaps. A core axis 50 is provided in the center of the laminated body 40. A ring-like packing 55 is disposed in a position between the lower lid 51 and housing 54. Similarly, a ring-like packing 56 is disposed in a position between the upper lid 52 and housing 54. These packings 55 and 56 prevent leaking of the electrolytic solution filled in the battery.

The lower lid 51 has a ring-like bearing 51a formed therein for supporting the core axis 50, and the upper lid 52 also has a ring-like bearing 52a for supporting the core axis 50. The mechanical strength of the secondary battery can be increased by forming the bearings 51a and 52a in the lids 51 and 52, respectively. The length of the bearings 51a and 51b in the direction of extension of the core axis 50 is set longer than the gaps provided between the lids 51 and 52 and housing 54.

It is necessary to provide the lids 51 and 52 with safety valves for letting out gas generating inside the battery. The lids 51 and 52 have either a positive terminal or a negative terminal, and it is necessary to include a PTC element in each terminal. Consequently, when a temperature increase occurs with the battery, and an overcurrent flows, the current in the battery can be cut off electrically. The positive electrode plate 44 of the laminated body 40 is electrically connected to the positive terminal through a conducting wire, the negative electrode plate 42 to the negative terminal through a conducting wire. These are electrically insulated from all of the lids 51 and 52 and housing 54.

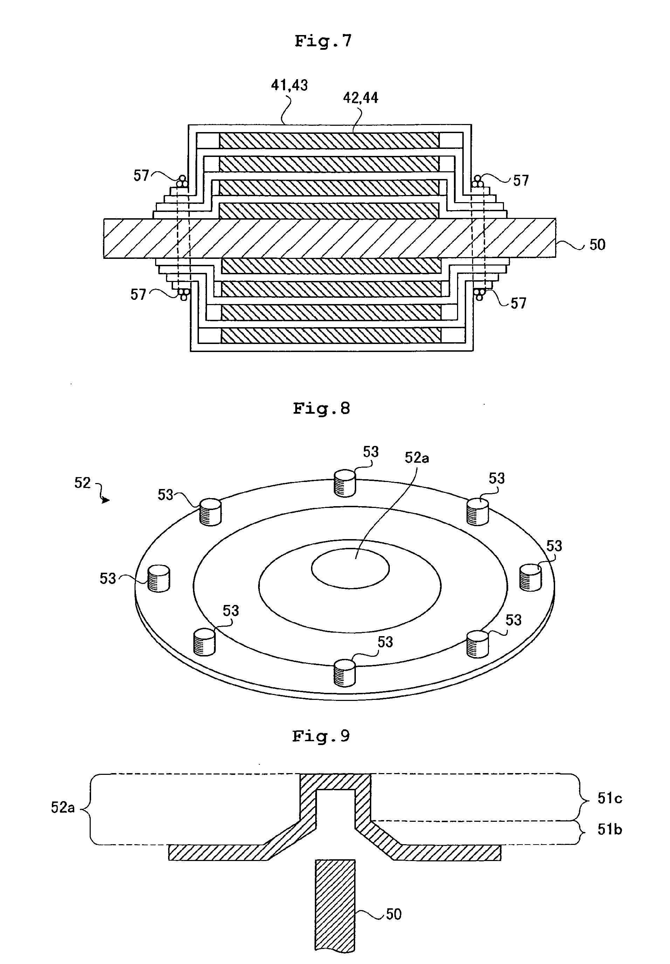

The structures of end regions of the laminated body 40 will be described. In the laminated body 40, as shown in Fig. 6, the width of the nonwoven fabrics 41 and 43 made of synthetic resin in the direction of extension of the core axis 50 is longer than that of the electrode plates 42 and 44. Therefore, in the opposite end regions of the laminated body 40 in the direction of extension of the core axis 50, the synthetic nonwoven fabrics 41 and 43 project from the electrode plates 42 and 44. Moreover, as shown in Fig. 7, the projecting parts at the opposite ends of the nonwoven fabrics 41 and 43 made of synthetic resin are bound together with ropes 57 made of a synthetic resin nonwoven fabric. When, in this state, the nonwoven fabrics 41 and 43 made of synthetic resin are placed under the hot and high-pressure condition, the nonwoven fabrics 41 and 43 made of synthetic resin become bonded and integrated together where they are bound tight by the ropes 57.

The secondary battery is provided with clamping bars 53 extending along the direction from the upper lid 52 toward the lower lid 51 (see Fig. 5). The upper lid 52 and lower lid 51 have through-holes formed therein for receiving the clamping bars 53. The clamping bars 53 are passed through both the through-holes formed in the upper lid 52 and the through-holes formed in the lower lid 51, to bridge the lower lid 51 and upper lid 52.

The secondary battery, when seen from the upper lid 52, is as shown in Fig. 8. That is, a plurality of clamping bars 53 are arranged along the circumference of the upper lid 52. The opposite ends of the clamping bars 53 are threaded for screwing nuts thereon. The bearing 52a for supporting the core axis 50 is formed centrally of the upper lid 52. A specific construction of the bearing 52a is shown in Fig. 9. The bearing 52a has a bulge formed by a central portion of the upper lid 52 to bulge away from the core axis 50. The bearing 52a has a recess formed therein to extend away from the core axis 50, and the core axis 50 contacts this recess. In a proximal portion 51b of the bearing 52a, the recess is tapered toward the forward end of the bearing 52a. In a distal portion 51c of the bearing 52a, it has a cylindrical shape substantially corresponding to the diameter of the core axis 50.

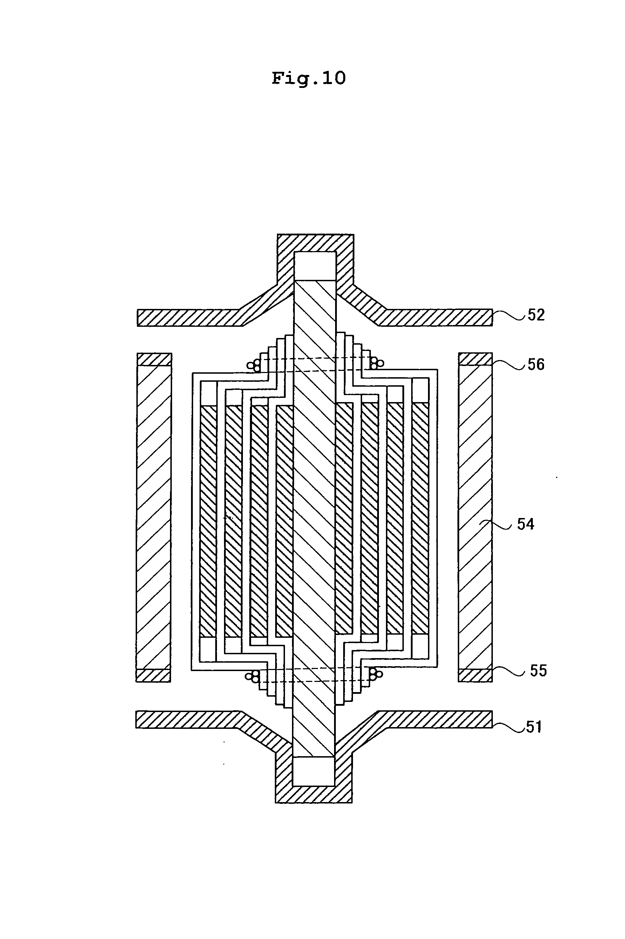

Fig. 10 shows an overall construction of the secondary battery to be placed in the oven of the high-pressure steam sterilizer or high-pressure steam pot. As shown in Fig. 10, the secondary battery to be manufactured is placed in the oven so that the lower lid 51 may be at the bottom of the oven interior, and the upper lid 52 at the top of the oven interior. At this time, the core axis 50 is inserted in a state not completely pushed into the bearings 51a and 52a, to leave gaps between the lower lid 51 and housing 54 and between the upper lid 52 and housing 54, respectively, for taking in the vapor.

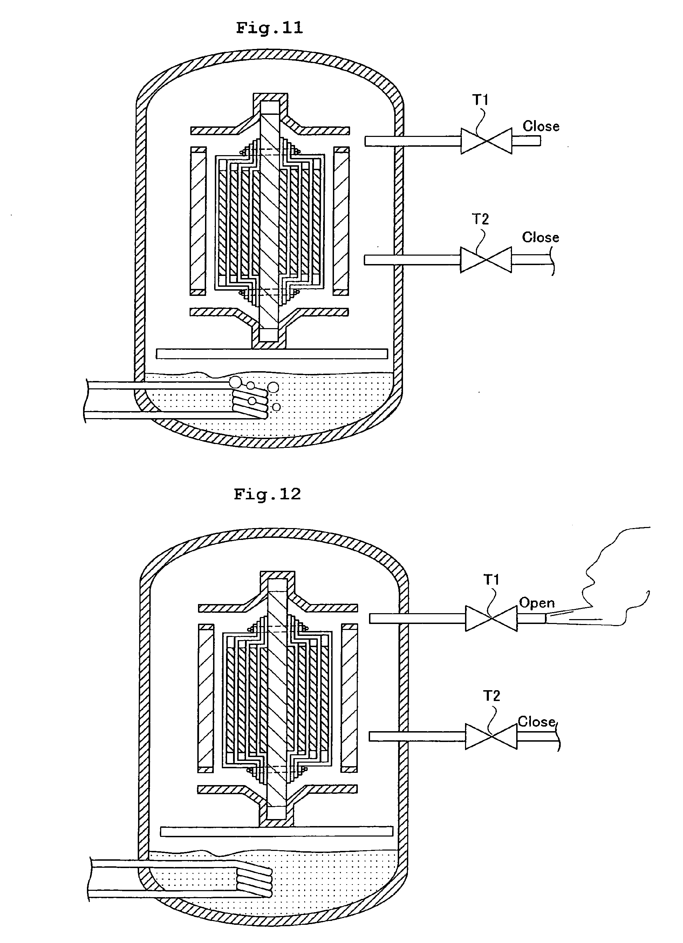

Fig. 11 shows a state where the secondary battery before being heated is introduced into the oven. When a liquid pool in the oven is heated, with an exhaust valve T1 and an electrolytic solution introduction valve T2 both closed, the interior of the oven will be in a hot and high-pressure state. Since the vapor flows in from the gaps provided between the lids 51 and 52 and housing 54 at this time, the interior of the laminated body 40 will also be in a hot and high-pressure state. The laminated body 40 will be heated and bonded in this oven. The nonwoven fabrics made of synthetic resin will be partially melted by the heat, and the nonwoven fabrics made of synthetic resin and the electrode plate will be bonded together. When a heater disposed in the bottom of the oven is heated, the liquid stored in the bottom of the oven will evaporate and the temperature and pressure in the oven will increase.

It is important to place the pillar-shaped laminated body 40 as standing vertically in the oven at this time. The vapor having entered the laminated body 40 is cooled and liquefied. With the laminated body 40 placed as noted above, this liquid will pass through gaps between the layers constituting the laminated body 40, to be discharged outside the secondary battery from the gaps provided between the lower lid 51 and housing 54, and will finally be returned to the liquid pool in the bottom of the oven. If the pillar-shaped laminated body 40 were placed in a horizontal position in the oven, the liquid produced in the laminated body 40 would remain in the laminated body 40 instead of being discharged therefrom. This would prevent the vapor entering the laminated body 40. The exhaust valve T1 and electrolytic solution introduction valve T2 are closed at this time. The exhaust valve T1 is connected to a cooler for cooling the vapor and collecting the liquid. This liquid can be used again for manufacturing a next secondary battery. A flow path controlled by the electrolytic solution introduction valve T2 is connected to a tank storing the electrolytic solution. The exhaust valve T1 is connected to a cooler for cooling the vapor and collecting the nonaqueous organic solvent. Though the secondary battery is placed upright in the oven, sufficient gaps need to be maintained between the lids 51 and 52 and housing 54. This is because it is necessary to allow the vapor to flow into and out of the laminated body 40 through these gaps, and cause the electrolytic solution to infiltrate the laminated body 40.

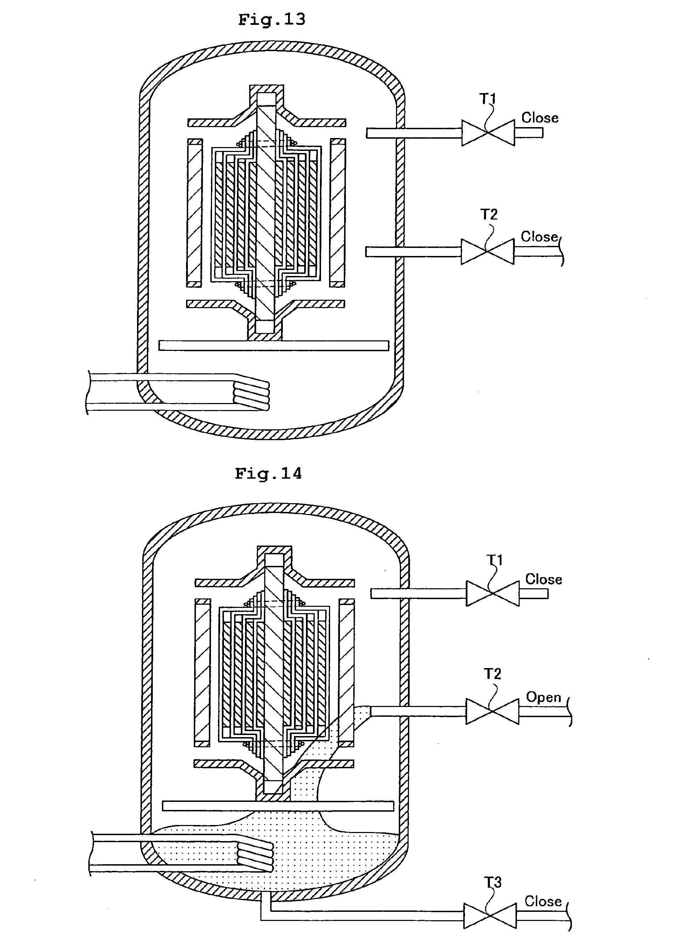

When the exhaust valve T1 provided for the oven in the high-pressure state is opened after completion of the bonding, the vapor in the oven which is in the high pressure state will be exhausted as shown in Fig. 12. Although Fig. 12 depicts a flow of the vapor to render the exhausting of the vapor readily perceivable, the vapor discharged, in practice, is cooled by the cooler and the liquid is collected. The liquid of the liquid pool is also evaporated now, and is discharged from the exhaust valve T1, whereby the interior of the oven becomes empty. When the exhaust valve T1 is closed again in this state, and no action is taken until the temperature inside the oven falls, the vapor will condense and the pressure in the oven lowers to a substantially vacuum state (see Fig. 13). At this time, the vapor flows out of the gaps provided between the lids 51 and 52 and housing 54, and the interior of the laminated body 40 will also be in a substantially vacuum state. A vacuum state can be produced reliably by devising the heating of the oven. That is, it is desirable to keep the exhaust valve T1 open from start of heating of the heater until the vapor fills the oven, and then close the exhaust valve T1. Consequently, the gas such as argon filling the interior of the oven before the heating is driven out through the exhaust valve T1, whereby the interior of the oven can be placed in a more highly vacuum state.

When, in such a state, the electrolytic solution introduction valve T2 provided for the oven is opened, the solvent flows into the oven promptly since the pressure in the oven has been reduced to a negative pressure. The introduced electrolytic solution tries to enter the laminated body 40 from the gaps provided between the lids 51 and 52 and housing 54. Since the hollows provided for the nonwoven fabrics made of synthetic resin do not include air, but are in a substantially vacuum state, the electrolytic solution infiltrates the hollows to fill the latter. Then, the solvent will be injected thoroughly to the interior of the nonwoven fabrics made of synthetic resin constituting the laminated body 40 (see Fig. 14). If the electrolytic solution is injected under pressure at this time, the electrolytic solution can be made to advance into the nonwoven fabrics made of synthetic resin with increased uniformity.

As shown in Fig. 14, a flow path for liquid drainage and a drain valve T3 for controlling this may be provided at the bottom of the high-pressure steam sterilizer or high-pressure steam pot. Consequently, the electrolytic solution filling the interior of the oven can be drained. In Figs. 11 - 14, the drain valve T3 is closed in all. The electrolytic solution is drained after the nuts are tightened on the clamping bars 53.

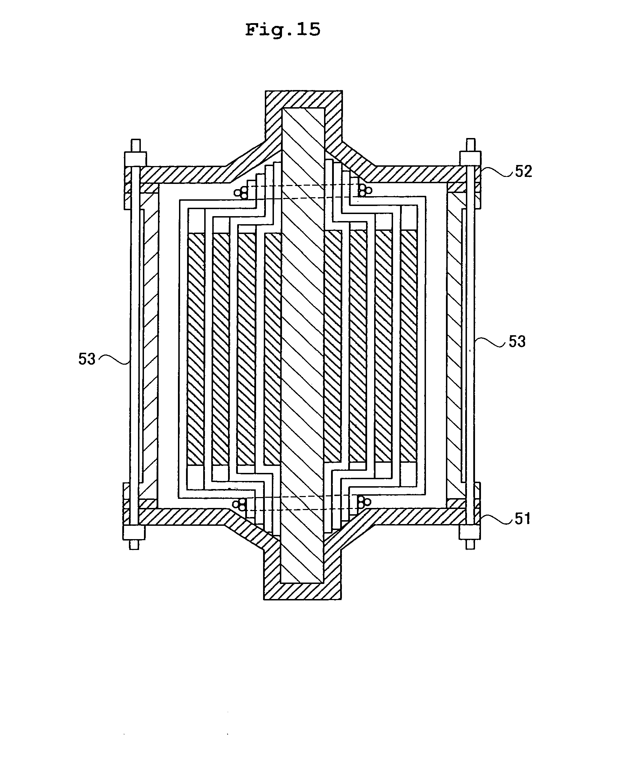

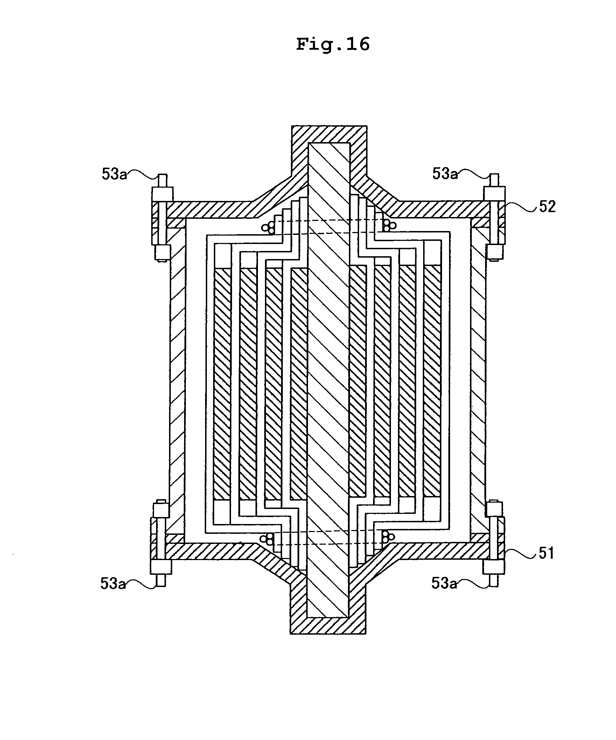

The secondary battery according to the present invention is completed if the nuts are tightened at the opposite ends of the clamping bars 53 when the electrolytic solution has infiltrated (see Fig. 15). Since the lids 51 and 52 cover the housing 54 without leaving space, and no excessive electrolytic solution remains in the battery. At this time, since the length of the bearings 51a and 52a in the direction of extension of the core axis 50 is set longer than the gaps provided between the lids 51 and 52 and housing 54, the clamping bars 53 may be removed after tightening the nuts on the clamping bars 53, two bolts 53a may be used as replacement for each clamping bar 53 as shown in Fig. 16. Then, the mechanical strength of the secondary battery can be improved, and no liquid leakage from the battery will occur. The bolts 53a are provided in order to fix individually the lower lid 51 and housing 54, and the upper lid 52 and housing 54. The secondary battery is easily completed only by tightening the nuts of the clamping bar 53. When manufacturing a nickel-hydrogen battery and a nickel-cadmium battery, water vapor is selected as the vapor to be filled into the oven. When manufacturing a lithium-ion battery, a nonaqueous organic solvent is selected as the vapor to be filled into the oven.

Care must be taken of the fact that lithium constituting a lithium-ion battery is a highly reactive alkaline metal. When manufacturing such lithium-ion battery, propylene carbonate may be selected as the vapor to be filled into the oven. The boiling point of propylene carbonate is 241.7°C, which is suitable for placing the interior of the oven in a high-temperature and high-pressure state. On the other hand, as the electrolytic solution, ethylene carbonate (C₃H₄O₃) is preferred. The boiling point of ethylene carbonate is 260.7°C, and it does not evaporate easily. Therefore, ethylene carbonate can also withstand the generation of heat of the battery at the time of use of the lithium-ion battery. Ethylene carbonate includes lithium salt, lithium hexafluorophosphate, and so on.

The quantity of liquid stored as the liquid pool in the oven needs to be an appropriate quantity. For example, when the quantity of liquid in the liquid pool is excessive, the liquid will remain without being completely drained even after the gas is exhausted. If the electrolytic solution is introduced into the oven in this state, the electrolytic solution mixed with the liquid for vapor generation will infiltrate the laminated body 40. When this happens, the manufactured secondary battery may fail to function as a battery.

According to the present invention, as described above, a secondary battery of a size corresponding to the capacity of the oven of the high-pressure steam sterilizer or high-pressure steam pot can be manufactured. That is, according to the manufacture method of the present invention, the laminated body 40 is bonded reliably and the electrolytic solution infiltrates the nonwoven fabrics made of synthetic resin reliably. It is therefore possible to manufacture a huge secondary battery which cannot be manufactured conventionally. The secondary battery manufactured in this way has a large capacity, which is well suited to a system which stores inexpensive nighttime electric power and uses this during the day, and which can also be used as an electric storage device for a standby power source operable at times of power failure.

Conventionally, a nonwoven fabric made of synthetic resin is not used as separator of a lithium-ion battery. However, according to the present invention, a nonwoven fabric made of synthetic resin can be used as separator of a lithium ion battery.

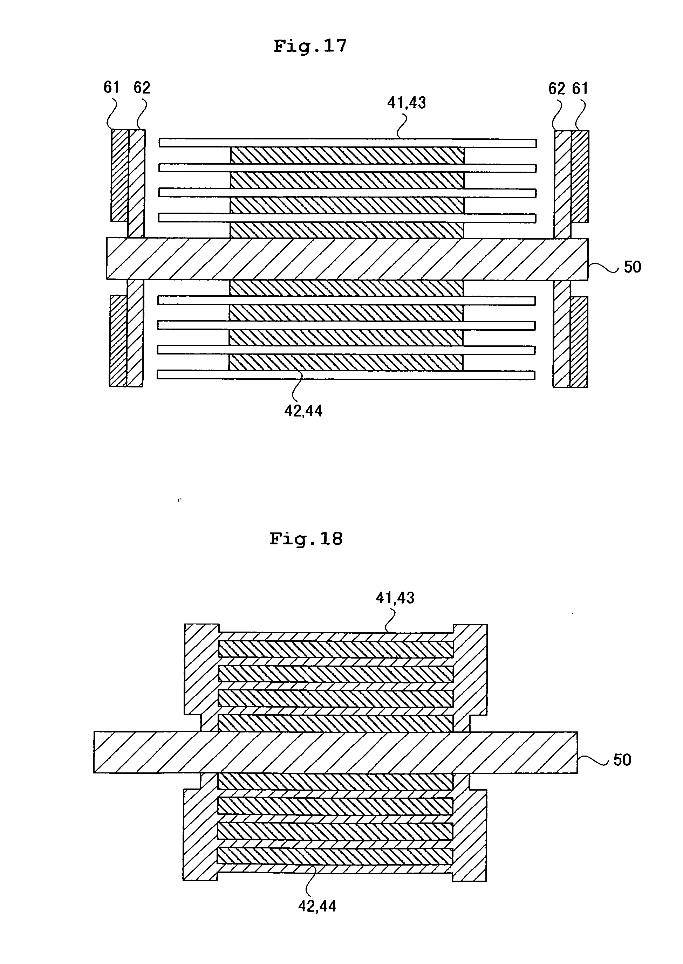

The present invention is not limited to the foregoing construction, but may be modified as follows:
(1) In the foregoing embodiments, the batteries manufactured are not limited to a nickel-hydrogen battery, a nickel-cadmium battery or a lithium-ion battery. The invention is applicable also to secondary batteries using magnesium, sodium and calcium as electrodes.
(2) Polyamide fiber can be used as the nonwoven fabrics made of synthetic resin in the foregoing embodiments. In this case, nylon 6 whose melting point is 215°C and nylon 66 whose melting point is 264°C can be used. A mixture of nylon 6 and nylon 66, or polyamide fiber mixed with glass fiber, may be used as a nonwoven fabric made of synthetic resin. Consequently, the temperature in the oven of in the bonding step can be varied.
(3) The secondary battery can also be manufactured without using the ropes 57 in the foregoing embodiment. In this case, as shown in Fig. 17, the core axis 50 is made to piece second insulating plates 62 and first insulating plates 61 in this order. The first insulating plates 61 and second insulating plates 62 are formed by cutting off nonwoven fabrics made of synthetic resin to circular shape, and have circular holes formed centrally thereof for receiving the cylindrical core axis 50. The diameter of the holes of the first insulating plates 61 is larger than the diameter of the core axis 50. The diameter of the holes of the second insulating plates 62 is set equal to the diameter of the core axis 50. A second insulating plate 62 is fitted on one end of the core axis 50, and then a first insulating plate 61 is fitted. Thus, the first insulating plate 61 and second insulating plate 62 are placed to overlap each other at one end of the core axis 50. Similarly, a second insulating plate 62 and a first insulating plate 61 are fitted in this order on the other end of the core axis 50.

When the secondary battery is heated in the oven of the high-pressure steam sterilizer or high-pressure steam pot, the second insulating plates 62 and the nonwoven fabrics 41 and 43 made of synthetic resin of the laminated body 40 are heated as contacting each other. Therefore, the second insulating plates 62 and nonwoven fabrics 41 and 43 made of synthetic resin are thermally bonded together. The first insulating plates 61 and second insulating plates 62 overlapping each other also are thermally bonded. Consequently, as shown in Fig. 18, in the oven, the first insulating plates 61, second insulating plates 62, and the second insulating plates 62 and nonwoven fabrics 41 and 43 made of synthetic resin, are bonded and integrated together. In this way, the insulating plates 61 and 62 can reliably insulate the lids 51 and 52 and electrode plates 42 and 44.

### [BRIEF DESCRIPTION OF THE DRAWINGS]

Fig. 1 is an explanatory view showing a first embodiment of a laminated body of different materials thermally bonded;
Fig. 2 is an explanatory view showing a second embodiment of a laminated body of different materials thermally bonded;
Fig. 3 is an explanatory view showing a third embodiment of a laminated body of different materials thermally bonded;
Fig. 4 is an explanatory view showing an embodiment in which a laminated body of different materials thermally bonded is applied to a battery;
Fig. 5 is an explanatory view showing the embodiment in which the laminated body of different materials thermally bonded is applied to the battery;
Fig. 6 is an explanatory view showing the embodiment in which the laminated body of different materials thermally bonded is applied to the battery;
Fig. 7 is an explanatory view showing the embodiment in which the laminated body of different materials thermally bonded is applied to the battery;
Fig. 8 is an explanatory view showing the embodiment in which the laminated body of different materials thermally bonded is applied to the battery;
Fig. 9 is an explanatory view showing the embodiment in which the laminated body of different materials thermally bonded is applied to the battery;
Fig. 10 is an explanatory view showing the embodiment in which the laminated body of different materials thermally bonded is applied to the battery;
Fig. 11 is an explanatory view showing the embodiment in which the laminated body of different materials thermally bonded is applied to the battery;
Fig. 12 is an explanatory view showing the embodiment in which the laminated body of different materials thermally bonded is applied to the battery;
Fig. 13 is an explanatory view showing the embodiment in which the laminated body of different materials thermally bonded is applied to the battery;
Fig. 14 is an explanatory view showing the embodiment in which the laminated body of different materials thermally bonded is applied to the battery;
Fig. 15 is an explanatory view showing the embodiment in which the laminated body of different materials thermally bonded is applied to the battery;
Fig. 16 is an explanatory view showing the embodiment in which the laminated body of different materials thermally bonded is applied to the battery;
Fig. 17 is an explanatory view showing an embodiment in which a laminated body of different materials thermally bonded is applied to a battery; and
Fig. 18 is an explanatory view showing the embodiment in which the laminated body of different materials thermally bonded is applied to the battery.

### [Description of References]

- 10: laminated body
- 11: nonwoven fabric A made of synthetic resin
- 12: nonwoven fabric B made of synthetic resin
- 13: nonwoven fabric C made of synthetic resin
- 20: laminated body
- 21: nonwoven fabric D made of synthetic resin
- 22: synthetic resin film
- 23: nonwoven fabric D made of synthetic resin
- 30: lamination body
- 31: nonwoven fabric E made of synthetic resin
- 32: metal film
- 33: nonwoven fabric F made of synthetic resin
- 40: laminated body
- 41: nonwoven fabric made of synthetic resin
- 42: negative electrode plate
- 43: nonwoven fabric made of synthetic resin
- 44: positive electrode plate

## Claims

1. A method of laminating different materials which superposes and thermally bonds different materials including nonwoven fabrics made of synthetic resin in two or more layers, wherein the layers are thermally bonded with each other while retaining a 3D conformation of fibers of the nonwoven fabrics made of synthetic resin, by heating at a heatproof temperature or higher, using a high-pressure steam sterilizer or a high-pressure steam pot.

2. The method of laminating different materials according to claim 1, wherein a vapor in the high-pressure steam sterilizer or the high-pressure steam pot is water vapor.

3. The method of laminating different materials according to claim 1, wherein a vapor in the high-pressure steam sterilizer or the high-pressure steam pot is a vapor of an organic solvent.

4. The method of laminating different materials according to any one of claims 1 to 3, wherein the different materials include at least two nonwoven fabrics made of synthetic resin which are formed of different materials.

5. The method of laminating different materials according to any one of claims 1 to 4, wherein the different materials include a synthetic resin film.

6. The method of laminating different materials according to any one of claims 1 to 4, wherein the different materials include a metal film.

## Patentansprüche

1. Verfahren zum Laminieren von unterschiedlichen Materialien, das unterschiedliche Materialien, einschließlich Vliesstoffe aus Kunstharz, in zwei oder mehreren Lagen überlagert und thermisch verbindet, wobei die Lagen unter Beibehaltung einer 3D-Gestalt von Fasern der Vliesstoffe aus Kunstharz durch Erhitzen auf eine hitzebeständige Temperatur oder höher unter Verwendung eines Hochdruck-Dampfsterilisators oder eines Hochdruck-Dampftopfes thermisch miteinander verbunden werden.

2. Verfahren zum Laminieren von unterschiedlichen Materialien nach Anspruch 1, wobei ein Dampf im Hochdruck-Dampfsterilisator oder Hochdruck-Dampftopf Wasserdampf ist.

3. Verfahren zum Laminieren von unterschiedlichen Materialien nach Anspruch 1, wobei ein Dampf im Hochdruck-Dampfsterilisator oder Hochdruck-Dampftopf ein Dampf eines organischen Lösungsmittels ist.

4. Verfahren zum Laminieren von unterschiedlichen Materialien nach einem der Ansprüche 1 bis 3, wobei die unterschiedlichen Materialien wenigstens zwei Vliesstoffe aus Kunstharz umfassen, die aus unterschiedlichen Materialien gebildet sind.

5. Verfahren zum Laminieren von unterschiedlichen Materialien nach einem der Ansprüche 1 bis 4, wobei die unterschiedlichen Materialien eine Kunstharzschicht umfassen.

6. Verfahren zum Laminieren von unterschiedlichen Materialien nach einem der Ansprüche 1 bis 4, wobei die unterschiedlichen Materialien eine Metallschicht umfassen.

## Revendications

1. Procédé de stratification de différents matériaux qui superpose et colle thermiquement différents matériaux y compris des tissus non tissés constitués de résine synthétique en deux couches ou plus, dans lequel les couches sont collées thermiquement les unes aux autres tout en retenant une conformation tridimensionnelle de fibres des tissus non tissés constitués de résine synthétique, en chauffant à une température résistante à la chaleur ou supérieure en utilisant un stérilisateur à vapeur haute pression ou une cuve à vapeur haute pression.

2. Procédé de stratification de différents matériaux selon la revendication 1, dans lequel une vapeur dans le stérilisateur à vapeur haute pression ou la cuve à vapeur haute pression est de la vapeur d'eau.

3. Procédé de stratification de différents matériaux selon la revendication 1, dans lequel une vapeur dans le stérilisateur à vapeur haute pression ou la cuve à vapeur haute pression est une vapeur d'un solvant organique.

4. Procédé de stratification de différents matériaux selon l'une quelconque des revendications 1 à 3, dans lequel les différents matériaux incluent au moins deux tissus non tissés constitués de résine synthétique qui sont formés de différents matériaux.

5. Procédé de stratification de différents matériaux selon l'une quelconque des revendications 1 à 4, dans lequel les différents matériaux incluent un film de résine synthétique.

6. Procédé de stratification de différents matériaux selon l'une quelconque des revendications 1 à 4, dans lequel les différents matériaux incluent un film métallique.
